# EUROPEAN PATENT APPLICATION

(11) **EP 1 452 955 A2**
(43) Date of publication of application: **01.09.2004**
(21) Application number: 03256781.0
(22) Date of filing: 28.10.2003
(51) Int. Cl.: G06F 3/12

(54) **Methods and systems for estimating print imaging material usage**

(30) Priority: 31.10.2002 US 286533
(71) Applicant: Hewlett-Packard Development Company, L.P., Houston, TX 77070 (US)
(72) Inventor: Serisky, David, Corvallis OR 97330 (US); Hogg, Graeme, Stoke Bishop Bristol BS19 1TT (GB); Whitty, Joseph P., Corvallis OR 97730 (US)
(74) Representative: Jackson, Richard Eric

(57) **Abstract**

Methods and systems for estimating print imaging material usage are described. In one embodiment, an exemplary method accesses print-ready data appropriate for a given printing device (200) and estimates print imaging material usage, at least in part, by analyzing the print-ready data.

## Description

### BACKGROUND

For relatively large printing needs, such as printing brochures, traditional printing presses, such as offset lithography presses, are often being displaced by modern printing or imaging devices including digital presses. Examples of digital presses include the Hewlett-Packard Indigo products among others. Modern imaging devices have an advantage over traditional presses in greatly diminished set-up time and associated costs. Various factors contribute to a determination of what printing technology is advantageous for a given print job. One determinative factor for many print jobs is the quantity of one or more print imaging materials (commonly ink or toner) that are used during a particular printing process on a given printing device. Present technologies are often inaccurate in estimating an amount of print imaging material required for a given print job.

Accordingly, the present invention arose out of concerns associated with providing improved accuracy in estimating print imaging material usage for a given printing or imaging device.

### BRIEF DESCRIPTION OF THE DRAWINGS

The same numbers are used throughout the drawings to reference like features and components.

Fig. 1 shows a block diagram of an exemplary host computing device.

Fig. 2 shows a block diagram of an exemplary printing device.

Figs. 3-5 show block diagrams of exemplary printing systems.

Fig. 6 shows a flow diagram that describes acts in a method in accordance with one embodiment.

### DETAILED DESCRIPTION

### Overview

In accordance with the embodiments described below, page description language data or "PDL" data is generated or otherwise produced on a host computing device.

A page description language (PDL) specifies the arrangement of a printed page through commands from a computer that the printer carries out. Hewlett Packard's Printer Control Language (PCL) and Adobe's Postscript are the two most commonly used PDLs. Modern PDLs describe page elements as geometrical objects, such as lines, arcs, and so on. PDLs define page elements independently of printer technology, so that a page's appearance should be consistent regardless of the specific printer used.

Accordingly, the term "PDL data" is intended to include any representation whatsoever of a PDL that is created by a host computer. A host computing device includes any suitable computing device including, but not limited to, variously configured personal computers ("PCs"), Apple Macintosh products, and digital cameras.

In the illustrated and described embodiments, the PDL data comprises the digital data that is created by the host computing device and that contains the information that PDLs typically include. As such, the PDL data is a device independent format that can provide instructions for displaying or printing an image ("print job") on various devices including printing devices.

The PDL data comprising a print job can be processed into printer-ready data that is utilized to produce an image on a given printing device's print engine. The print-ready data can be considered as device specific data that can comprise a series of dots or pixels comprising an individual page to be printed. As used here "pixel" means the smallest unit of area to which a printing device can either apply or not apply a print imaging material. In the context of this document, the term "printing device" is intended to include any device whatsoever that is capable of rendering, displaying or printing an image corresponding to the PDL data. Specific examples of printing devices include, without limitation, printers such as laser and ink jet printers, digital presses, facsimile machines, copying machines and the like.

The print-ready data can be analyzed, either before or after printing, to estimate an amount of print imaging material (such as ink or toner) that the printing device used, or will use, to print the print job. In some embodiments, this analysis can comprise determining a total number of pixels in a unit of the print-ready data and a sub-set of the pixels to which a print imaging material is to be applied. This can allow an accurate estimation of print imaging material usage.

### Exemplary Host Computing Device

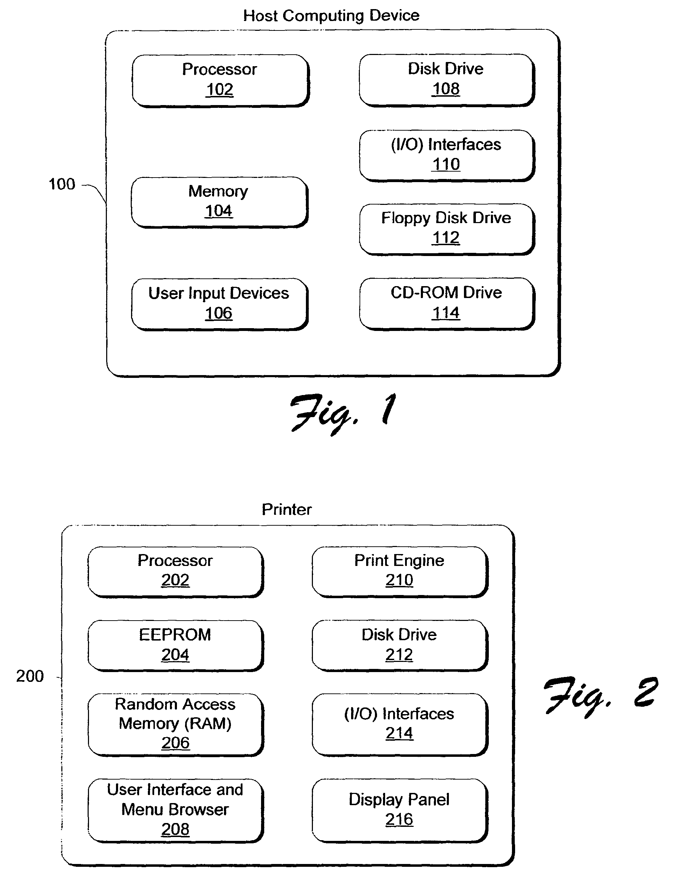

For purposes of understanding various structures associated with an exemplary host computing device, consider Fig. 1.

Fig. 1 is a block diagram showing exemplary components of a host computing device in the form of a computer 100. Computer 100 includes a processor 102, a memory 104 (such as ROM and RAM), user input devices 106, a disk drive 108, input/output (I/O) interfaces 110 for inputting and outputting data, a floppy disk drive 112, and a CD-ROM drive 114. Processor 102 performs various instructions to control the operation of computer 100. User input devices 106 include a keyboard, mouse, pointing device, or other mechanism for inputting information to computer 100. I/O interfaces 110 provide a mechanism for computer 100 to communicate with other devices.

### Exemplary Printing Device

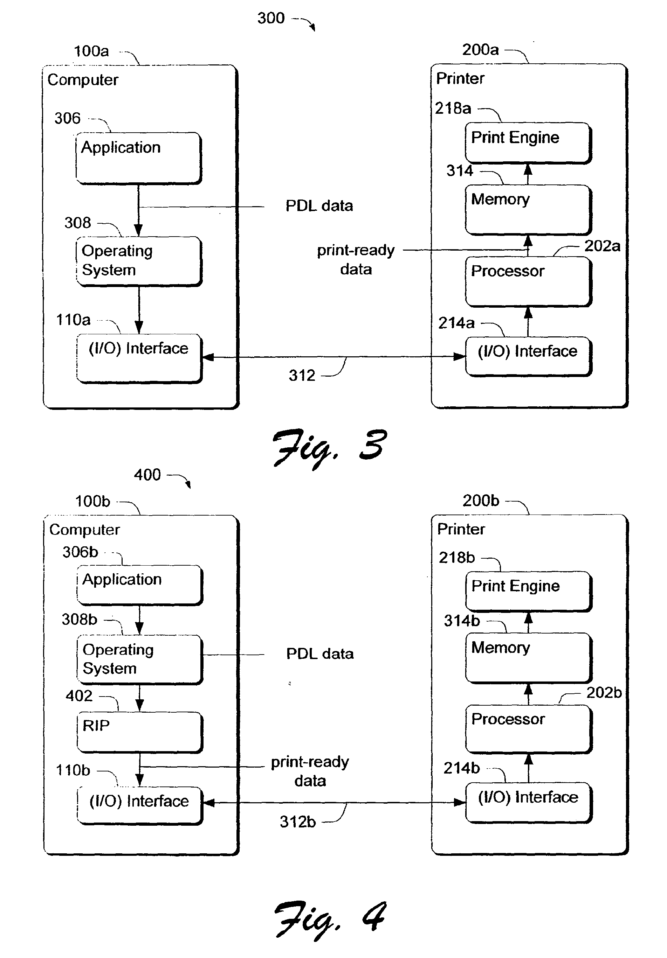

For purposes of understanding various structures associated with an exemplary printing device, consider Fig. 2.

Fig. 2 is a block diagram showing exemplary components of one type of printing device in the form of a printer 200. It will be appreciated and understood that the illustrated printer constitutes but one exemplary printing device and is not intended to be limiting in any way. Accordingly, other printing devices can be used in connection with the inventive techniques and systems described herein. These other printing devices can have components that are different from, or additional to, those described immediately below.

Printer 200 includes a processor 202 and several memory mechanisms including an electrically erasable programmable read-only memory (EEPROM) 204, and a random access memory (RAM) 206. Processor 202 processes various instructions necessary to operate the printer 200 and communicate with other devices. EEPROM 204 and RAM 206 store various information such as configuration information, fonts, templates, data being printed, and menu structure information. Although not shown in Fig. 2, a particular printer may also contain a ROM (non-erasable) in place of or in addition to EEPROM 204. Furthermore, a printer may alternatively contain a flash memory device in place of or in addition to EEPROM 204.

Printer 200 also includes a disk drive 212, and input/output (I/O) interface(s) 214. Such I/O interface(s) can include, but are not limited to, serial/parallel interfaces, and network interfaces. Disk drive 212 provides additional memory for data being printed or other information used by the printer 200. Although both RAM 206 and disk drive 212 are illustrated in Fig. 2, a particular printer may contain either RAM 206 or disk drive 212, depending on the storage needs of the printer. For example, an inexpensive printer may contain a small amount of RAM 206 and no disk drive 212, thereby reducing the manufacturing cost of the printer.

An I/O interface can comprise a network interface that provides a connection between printer 200 and a data communication network. A network interface can allow devices coupled to a common data communication network to send print jobs, menu data, and other information to printer 200 via the network. Similarly, an I/O interface comprising a serial/parallel interface provides a data communication path directly between printer 200 and another device, such as a workstation, server, or other computing device. Thus, some exemplary printing devices may employ a single I/O interface, while others employ multiple I/O interfaces.

Printer 200 also includes a print engine 210 that includes mechanisms that are arranged to selectively apply a print imaging material (e.g., liquid ink, toner, etc.) to a print media (e.g., paper, plastic, fabric, etc.) in accordance with print-ready data corresponding to a print job. Suitable printers can be configured to apply one or more colors of print imaging material to the print media. For example, some suitable printers are configured to apply a single color of print imaging material. Other suitable printers can be configured to apply 4 or 8 colors of print imaging material, among others.

The print engine 210 can comprise conventional laser or inkjet mechanisms, among others. A laser printing mechanism selectively causes toner to be applied to an intermediate surface of a drum or belt. The intermediate surface can then be brought within close proximity of a print media in a manner that causes the toner to be transferred to the print media in a controlled fashion. The toner on the print media can then be more permanently fixed to the print media, for example, by selectively applying thermal energy to the toner.

A laser printer is an example of a "half-tone printer." With a half-tone printer, a given unit or pixel of the print media either receives print imaging material or it does not. Such printers achieve various shades and colors by creating an agglomeration of adjacent units, which when viewed by the human eye, appear in as a desired image. Other suitable printer types will be recognized by the skilled artisan.

Print engine 210 can also be configured to support duplex printing, for example, by selectively flipping or turning the print media as required to print on both sides. Those skilled in the art will recognize that there are many different types of print engines available, and that for the purposes of the present invention print engine 210 can include any of these various types.

Printer 200 also contains a user interface/menu browser 208 and a display panel 218. User interface/menu browser 208 allows the user of the printer to navigate the printer's menu structure. User interface 208 may be a series of buttons, switches or other indicators that are manipulated by the user of the printer. Display panel 218 is a graphical display that provides information regarding the status of the printer and the current options available through the menu structure.

### Exemplary First System

Fig. 3 shows an exemplary system 300 comprising a computer 100a communicably coupled to a printer 200a. In this particular example, the computer 100a comprises one or more applications 306, and an operating system 308. The operating system 308 and applications 306 can run on a processor, such as processor 102 described above. Application(s) 306 can comprise any suitable applications that permit a user to create a document for printing. Application 306 and operating system 308 cooperate to provide PDL data. An exemplary application might be a word processing, or spreadsheet application, among others. The PDL data can represent various page images. The pages can include text, graphics, and scanned or computer-generated images among others. The PDL data can include commands that define graphic states for each page or sub-set of a page. The graphic states are sets of attributes such as angle, scale factor, type-font, location etc. describing the image.

In this exemplary embodiment, PDL data can be sent from the computer's I/O interface 110a coupled to a bus 312. The PDL data can be received from bus 312 by an I/O interface 214a of printer 200a. The PDL data can be processed by the printer's processor 202a to print-ready data.

In some embodiments, the PDL data can be stored in memory 314 before processing. Suitable memory is described above in relation to Fig. 2. Further embodiments can store the print-ready data until utilized in association with the print engine.

In some embodiments, the processor 202a can comprise a rastor image processor (RIP). The RIP can generate data regarding multiple pixels. In one embodiment, a bit map comprising data regarding multiple pixels can be formed by the RIP. A bit map can be organized into suitable distinct units. In some embodiments, a suitable unit can comprise a printable page. For example, a bit map of a given page can contain data about every pixel comprising that page. In some of these embodiments, for each page to be printed, a bit map can be created for each color that the printer is capable of printing. So for example, on a four color printer, a one page print job can be represented as 4 individual monochromatic bit maps; one for each page for each color.

While some suitable embodiments utilize one page bit maps, other embodiments can utilize other bit map sizes. For example, some embodiments can group the print-ready data into bands which are geometrical subsets of a page. Those of skill in the art will recognize other suitable configurations.

Alternatively, or additionally, to the monochromatic bit maps, other suitable embodiments can utilize other formats. For example, in some formats, such as those utilizing an interlaced image, an individual pixel may have a group of bits dedicated to describing it, and then the next pixel is described in a corresponding manner. For example, in a four color application, a first pixel may have four concurrent bits dedicated to it, one corresponding to the presence or absence of each color. Similarly, the next four bits describe the next pixel, and so on. Thus, data can be obtained form various types of bit maps.

The bit map data can be in any suitable format; examples include, but are not limited to, BMP, TIFF, GIF, and JPEG. In one embodiment, the RIP converts the PDL data to TIFF format files. In this embodiment, individual monochromatic TIFF files can be made for each page; the number of TIFF files corresponding to the number of colors of print-imaging material that the printer possesses multiplied by the number of pages in a print job. For example, for a one page print job, a printing device that has only one color of print imaging material can form a single one page bit map. Similarly, a printing device that has eight colors of print imaging material can form a monochromatic bit map page for each color, resulting in eight TIFF files.

A suitable printing device can process PDL data into print-ready data in accordance with various suitable parameters. Commonly processing the PDL data to print-ready data can include incorporating adjustments for a given printing device and/or print engine.

In one such example, PDL data may describe a "desired image" which in this example comprises the character "e" in a specific font size and type. The PDL data can further describe the desired image as being a desired shade of blue color, and a location where the desired image should appear. The RIP can process this data into print-ready data that will cause certain pixels to receive blue print imaging material while other pixels will not receive print imaging material.

Various suitable types of printers and/or print engines can employ various algorithms to produce a print image which closely approximates the desired image, as will be recognized by one of skill in the art. Such algorithms can contain various compensations for human perception of color shades which are often not linear. For example, one line of printers may achieve a desired shade by coloring 40 percent of the pixels while another printer line may require 50 percent coverage.

The print-ready data can be accessed to estimate an amount of print imaging material required for a print job on a given printing device. In one embodiment, the printing device's processor 202a can access the print-ready data to estimate an amount of print imaging material required for the print job. In some embodiments, the processor can access the print-ready data from memory 314. In an embodiment where the print-ready data is stored as individual TIFF files comprising individual monochromatic bit maps, the processor can access each monochromatic page. Using this data, a number of pixels on each page and which of those pixels are to have ink applied to them can be calculated or otherwise estimated. This can be achieved in one embodiment by counting the number of pixels that are to have ink applied to them, counting the total number of pixels on the page, and dividing the later into the former to calculate the coverage.

Where a number of pixels receiving print imaging material is estimated, an estimation of print imaging material usage can be determined by, among other suitable ways, determining an average number of pixels that a given unit of print imaging material will cover. For example, an amount of pixels that can be covered with a given amount of print imaging material can be predetermined for a given printer type. The skilled artisan will recognize various suitable techniques for establishing such a figure.

In but one example, a container containing print imaging material can be weighed and then installed in a given model of a printing device. A known number of pixels can then have print imaging material applied thereon. The container can then be removed and weighed again, the difference between the first and second weights comprising an amount of print imaging material used. So for example, applying print imaging material to 1,000,000 pixels may require one gram of print imaging material. Utilizing this predetermined value in combination with determining a number of pixels to be "covered" in a print job allows an estimate of print imaging material usage to be determined.

Other suitable embodiments can make estimations for usage for each of the colors the printing device is capable of printing. Other suitable embodiments can provide data on a per page basis and/or on a complete print job basis, among others. Further, where it is desired to make multiple copies of the same print job, an amount of print imaging material usage for the total number of copies can be determined.

Print imaging material usage estimations based on the print-ready data can be more accurate than those made from PDL data. For example, the print-ready data can more accurately portray how a given printer will achieve a desired image contained in the PDL data than can be established from analyzing the PDL data or other methods.

The print imaging material usage information can, in some embodiments, be displayed for a user. Suitable display devices are described above in relation to Figs. 1 and 2 above. In some embodiments, the display can be on the printing device, while other suitable embodiments can display the information on the host computing device. Other suitable embodiments will be recognized by the skilled artisan.

### Exemplary Second System

Fig. 4 shows another exemplary system 400. The system comprises a computer 100b and a printer 200b. As with the system shown in Fig. 3 the computer has an application 306b and an operating system 308b. PDL data can be produced in the operating system 308b and application 306b. In this embodiment, the computer can also contain a RIP 402. Alternatively, the computer can run software and/or firmware that can allow the computer to achieve the functionality of a RIP to process PDL data into print-ready data appropriate for a printing device to which the computer can be functionally coupled. I/O Interface 110b can be coupled to bus 312b and ultimately to printer 200b via I/O interface 214b. In this embodiment, the printer's processor 202b and memory 314b can receive the print-ready data and cause pages to be rendered accordingly by print engine 218b.

The exemplary computer 100b can be coupled to other printing devices in addition to printer 200b as shown here. Depending upon various characteristics of the other printing devices', computer 100b can contain a different RIP for each of the different types of printing devices to which it is coupled. In some of these embodiments, a PDL file could be ripped according to a particular printing device selected by a user. The RIPed data can then be processed by the computer to estimate print imaging material usage.

In another embodiment, where large numbers of copies of a single print job are desired, a PDL file can be run through a RIP corresponding to each of several different printing devices to which the computer is coupled. This can allow for print-ready data to be formed for the print job for each of the printing devices. The print-ready data for each different printing device can be analyzed to determine potential print imaging material usage. In this way, a comparison of the print imaging material usage of the different printing devices can be compared for that particular print job. Among other advantages, this can allow the most cost effective printing device to be utilized for the print job.

### Exemplary Third System

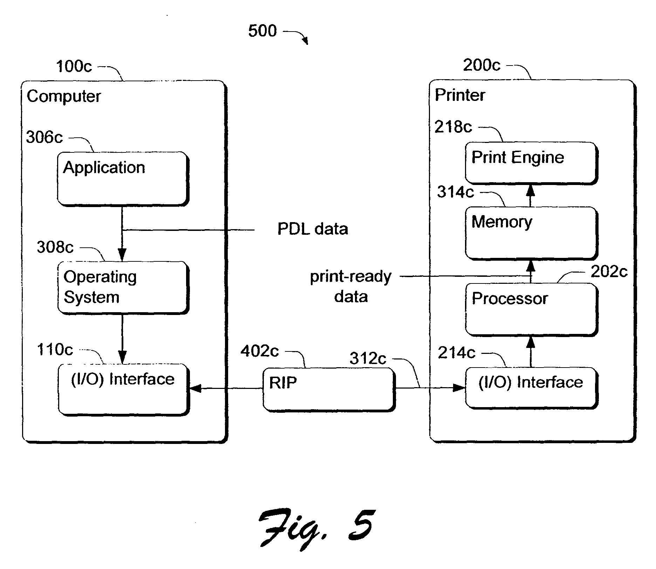

Fig. 5 shows another exemplary system 500. The system comprises a computer 100c coupled to a printer 200c. In this embodiment, the computer 100c has an application 306c and an operating system 308c. PDL data can be produced in the operating system 308c and application 306c. The PDL data can be output via I/O interface 110c to a bus 312c or other suitable communication device.

This embodiment has a freestanding processing device 502 comprising a RIP that can process the PDL data from the computer 100c into print-ready data for a given printing device 200c. The print-ready data can be sent via the bus 312c to an I/O interface 214c of printing device 200c. The processing device 502 can further have software and/or firmware for accessing the print-ready data to estimate print imaging material usage for the print-ready data. The estimated print imaging material usage can in some embodiments be displayed for a user, either prior to, or subsequent to, printing. In some embodiments, the processing device can have display capabilities, while in other embodiments, the print imaging material usage information can be sent to another device, such as computer 100c and/or printer 200c for display.

For the ease of explanation, the embodiments described above have processed PDL data into print-ready data at one location such as a printing device or a computing device and then processed the print-ready data to determine print imaging material usage at that same location. Such need not be the case. For example, a printing device can receive PDL data and process the PDL data to print-ready data. The print-ready data can be accessed and analyzed by a host computing device to estimate an amount of print imaging material usage associated with the print-ready data.

### Exemplary Method

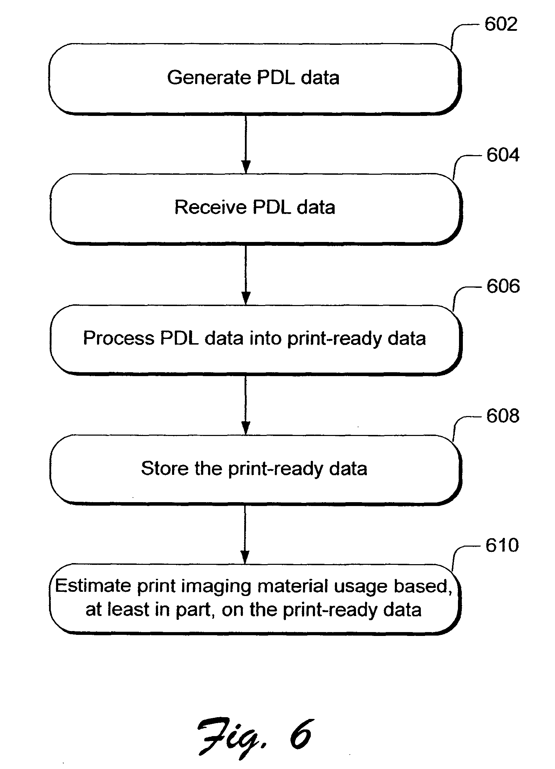

Fig. 6 is a flow diagram that describes acts in a method in accordance with one embodiment. The acts can be implemented in any suitable hardware, software, firmware or combination thereof. In the illustrated and described embodiments, the acts are implemented in software. All of the described acts need not be present in a particular embodiment. Further, the acts described below may occur on different devices comprising an exemplary system.

As shown at 602, the exemplary method can generate PDL data. Such PDL data can comprise a document which a user desires to print. The PDL data can be generated on various suitable applications embodied, for example, on a host computing device, examples of which are described above.

The method can further receive PDL data as shown at 604. The PDL data can be received by a printing device or a freestanding RIP among others.

The method can process PDL data into print-ready data as shown at 606. Such an act can, in some embodiments, comprise RIPing the PDL data. The act of processing can be achieved by a processing device configured with suitable firmware or software as described above. Such processing can include various compensations that allow a given printing device to better approximate a desired image described in the PDL data.

Act 608 can store the print-ready data. This can allow the print-ready data to be generated by the processor regardless of the availability of the print engine to actually render a printed image from the print-ready data. Some suitable memory components for storing the print-ready data are described above.

The method can, as shown at 610, estimate print imaging material usage based, at least in part, on the print-ready data. This can be achieved in some embodiments by accessing the print-ready data stored as bit map images. The bit map images can describe a number of pixels contained therein, and a subset of those pixels to which print imaging material is to be applied. Some embodiments can form a monochromatic bit map page for each individual page to be printed.

Some of these embodiments can determine a total number of pixels contained in the print-ready data, and which of those pixels receives print-imaging material. In some of these embodiments, print-imaging material usage can be estimated per color, per page, total usage, or any other combination which can be desirable for a user. Such information can be displayed in a manner and location suitable for a user. This can be advantageous in allowing a user to accurately estimate print imaging material usage before actually printing.

The print imaging material usage estimations can also be conducted on multiple different printing device models to allow the user to compare relative print-imaging material usage and therefore cost. This can allow the user to advantageously select one of the printing devices based, at least in part, on relative print-imaging material usage.

The skilled artisan will recognize other applications to which the described embodiments can be employed. For example, another application can be to track supplies in open loop systems. In such an example, the amount of ink or toner that was loaded into a printing device is often known and/or controlled. As printing progresses, it has previously been difficult to accurately determine the current amount of ink in the printing device.

With the described embodiments, the amount of ink remaining in the printing device can be determined and printing stopped before the supply becomes inadequate for proper printing. The same can apply to estimating if there is enough ink or toner in the printing device to print a document before allowing the document to be printed. This can be especially applicable in instances of unattended printing. For example, where a print job is started by a user and then the user leaves and returns subsequently to pick up the completed print job.

Similar embodiments can be utilized with large format printers. Previously, if a print job was started with an inadequate ink supply, and had to be stopped to add ink part way through the printing process, a visible band might be created in the print image due to ink drying on the print media during the time required to refill the ink supply. With the present embodiments, before printing begins, the amount of ink remaining in the printing device and the amount required to complete a desired print job can be compared to determine if the print job can be completed without adding ink to the printing device.

### Conclusion

The methods and systems described above enable a print job to be generated as PDL data. The PDL data can be processed into print-ready data appropriate for a given printing device. The print-ready data can be analyzed to provide an estimation of print-imaging material usage for the print job on a given printing device. By estimating the print-imaging material as a function of the print-ready data, a more accurate understanding of available or used resources can be provided. As a result, the ability to manage, organize and schedule consumables can be enhanced.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A system, comprising:
a host computing device (100) configured to generate PDL data comprising a print job;
a processor (102) communicatively associated with the host computing device (100) for processing the PDL data to print-ready data; and,
wherein the processor (102) is configured to estimate print imaging material usage, at least in part, by analyzing the print-ready data.

2. A system as recited in claim 1, wherein the processor (102) estimates print imaging material usage, at least in part, by determining a total number of pixels in the print-ready data and a subset of the pixels to be covered with print imaging material.

3. A system as recited in claim 1, wherein the processor (102) is resident at the host computing device (100).

4. A printing device (200), comprising:
a print engine (210) for selectively applying a print imaging material to a print media; and,
a processor (202) for processing PDL data into print-ready data suitable for the print engine (210), wherein the processor is configured to estimate print imaging material usage, at least in part, by analyzing the print-ready data.

5. A printing device (200) as recited in claim 4, wherein the processor (202) is configured to estimate print imaging material usage by determining a total number of pixels in the print-ready data and a subset of the pixels to which print imaging material is to be applied.

6. A printing device as recited in claim 4, wherein the print-ready data comprises an interlaced image.

7. A printing device as recited in claim 4, wherein the print-ready data comprises a bit map.

8. A method comprising:
receiving a data stream comprising PDL data (604);
processing the PDL data into print-ready data appropriate for a given printing device (606); and,
estimating print imaging material usage, at least in part, by analyzing the print-ready data (610).

9. A method as recited in claim 8, wherein said processing comprises RIPing the PDL data.

10. A device comprising:
means for accessing print-ready data appropriate for a given printing device (200); and,
means for estimating print imaging material usage, at least in part, by analyzing the print-ready data.
